(19) Europäisches Patentamt / European Patent Office / Office européen des brevets

(11) **EP 3 244 325 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
**G06F 30/3312** *(2020.01)* **G06F 13/362** *(2006.01)*
**G06F 13/40** *(2006.01)*

(21) Anmeldenummer: **16168898.1**

(22) Anmeldetag: **10.05.2016**

(54) **VERFAHREN ZUR ZEITLICH SYNCHRONISIERTEN AUSGABE UND/ODER ZEITLICH SYNCHRONISIERTEN VERARBEITUNG VON SIGNALEN**

METHOD FOR THE SYNCHRONIZED OUTPUT AND/OR SYNCHRONIZED PROCESSING OF SIGNALS

PROCEDE DE SORTIE SYNCHRONISEE DANS LE TEMPS ET/OU DE TRAITEMENT SYNCHRONISE DANS LE TEMPS DE SIGNAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.11.2017 Patentblatt 2017/46**

(73) Patentinhaber: **dSPACE digital signal processing and**
**control engineering GmbH**
**33102 Paderborn (DE)**

(72) Erfinder:
• **Kalte, Heiko**
**33106 Paderborn (DE)**
• **Lubeley, Dominik**
**33415 Verl (DE)**

(56) Entgegenhaltungen:
**US-A- 6 031 847    US-B1- 6 370 200**

• **Eric Peasley: "An Introduction to Using Simulink", , 2013, Seiten 1-29, XP055322606, Gefunden im Internet: URL:http://www.eng.ox.ac.uk/~labejp/Semina r/Simulink/Simulink_Introduction.pdf [gefunden am 2016-11-24]**
• **Altera Corporation: "White Paper WP-01208-1.0: Hardware in the Loop from the MATLAB/Simulink Environment", , September 2013 (2013-09), Seiten 1-9, XP055298345, Gefunden im Internet: URL:https://www.altera.com/literature/wp/w p-01208-hardware-in-the-loop.pdf [gefunden am 2016-08-29]**
• **Wojciech M Zabolotny: "Automatic latency balancing in VHDL-implemented complex pipelined systems", , 22. November 2015 (2015-11-22), Seiten 1-16, XP055322276, Gefunden im Internet: URL:https://arxiv.org/pdf/1509.08111v3.pdf [gefunden am 2016-11-23]**
• **None**

**Beschreibung**

Die Erfindung betrifft ein Verfahren zur zeitlich synchronisierten Ausgabe von Signalen und/oder zeitlich synchronisierten Verarbeitung von erfassten Signalen, bevorzugt synchron erfassten Signalen an mehreren Ein- und/oder Ausgabekanälen einer elektronischen Schaltung.

Insbesondere wird hier unter einem Signal im Sinne der Erfindung ein elektrischer oder datentechnischer Repräsentant (Bit, Byte, Wort etc.) einer Information verstanden. Z.B. kann in der TTL-Technologie ein elektrischer Spannungswert größer als 2,4 V einen logischen "High" - Wert als digitale Information repräsentieren. Der nachfolgend auch verwendete Begriff der Daten wird somit auch als spezielle Art eines Signals verstanden.

Elektronische Schaltungen mit Ein- und/oder Ausgabekanälen sind im Stand der Technik allgemein bekannt. Sie dienen dazu, um an den Pins der Ausgabekanäle elektrische Signale auszugeben und/oder an den Pins der Eingangskanäle dort anliegende elektrische Signale zu erfassen, z.B. durch eine Analog/Digital - Wandlung, um die erfassten Signale einer Weiterverarbeitung zuzuführen, z.B. auf dieser genannten Schaltung oder auf weiterer Elektronik, die mit der Schaltung verbunden ist.

Aus der EP6370200B1 ist eine Schaltung zur Vermessung und Korrektur von Latenzen mehrere Signalleitungen bekannt.

Unter einem Kanal wird dabei z.B. allgemein eine Anordnung elektronischer Schaltkreise zwischen einer Eingangsseite und einer Ausgangsseite verstanden, die eine dem Kanal zugeordnete Funktion durchführen, wie z.B. die schon genannte Analog-Digital-Wandlung oder eine analoge Verstärkung oder Filterung.

Zumindest eine Seite von Eingangsseite und Ausgangsseite kann durch einen Pin gegeben sein, an dem ein elektrisches Signal (analog oder digital) physikalisch anliegt. Die andere Seite kann je nach Kanalfunktion ebenso durch einen Pin gegeben sein, z.B. bei einem analogen Verstärker oder auch durch einen Speicher oder ein Register, z.B. bei einem Wandler, der digitale Werte an der Ausgangsseite bereitstellt oder an der Eingangsseite benötigt.

Ein typisches und bevorzugtes Anwendungsgebiet, auf welches die Erfindung jedoch nicht beschränkt ist, stellt die HIL-Simulation, die sogenannte Hardware-in-the-Loop-Simulation dar. Hierbei werden Steuergeräte, z.B. KFZ-Steuergeräte einer Prüfung auf korrekte Funktion unterzogen, wofür das zu prüfende Steuergerät an eine Schaltung der eingangs genannten Art, die häufig auch als I/O-Board bezeichnet wird, angeschlossen wird, um über die Schaltung Signale auf das Steuergerät aufzuprägen und/oder von diesem Signale zu erfassen.

Dafür läuft auf einer Simulationsumgebung das Softwaremodell einer Testumgebung, bei einem Kraftfahrzeug z.B. die Simulation einer Fahrt. Simulierte Ereignisse werden durch elektrische, die Ereignisse repräsentierende Signale an die Ausgabekanäle, z.B. die Pins oder Register der Ausgabekanäle der Schaltung angelegt, um so an das Steuergerät übertragen zu werden und/oder von Steuergerät werden Signale an die Eingabekanäle, z.B. die Pins oder Register der Eingabekanäle der Schaltung angelegt, um so erfasst und in der Simulationsumgebung verarbeitet werden zu können. So kann ein Steuergerät in einer simulierten Umgebung betrieben werden, als wenn es tatsächlich in der echten Umgebung betrieben würde.

Die Simulationsumgebung oder kurz der Simulator wird z.B. gebildet durch eine Datenverarbeitungsanlage mit wenigstens einem Prozessor oder mehreren parallel betriebenen Prozessoren, welche das Softwaremodell abarbeiten. Ein solches Modell wird z.B. über eine bevorzugt echtzeitfähige Software gebildet, die z.B. ein bevorzugt grafisches Benutzerinterface aufweist und weiter bevorzugt mittels Softwareobjekten programmiert wird.

Eine solche Software ist z.B. MATLAB, Simulink oder auch RTI (Real-Time-Interface) der Anmelderin, welche z.B. ein Verbindungsglied zu Simulink bildet. Softwareobjekte werden in vorgenannten Fällen z.B. grafisch als Block programmiert, insbesondere hierarchisch. Eine Simulationsumgebung ist jedoch nicht auf die Verwendung dieser jeweils beispielhaft genannten Software beschränkt. Das Softwaremodell ist entweder direkt nach Programmierung oder nach Compilierung auf der Simulationsumgebung lauffähig.

Eine Prozessorschaltung, die den wenigstens einen Prozessor umfasst, kann mit wenigstens einer Schaltung in Verbindung stehen, welche die genannten Ein-/Ausgabekanäle aufweist.

Es kann auch vorgesehen sein, dass wenigstens eine solche Schaltung, welche Ein- und/oder Ausgabekanäle umfasst, mit einer FPGA-Schaltung in Verbindung steht, um Signale von dieser zu erhalten oder an diese bereitzustellen. Eine FPGA-Schaltung kann wiederum mit der Prozessorschaltung in Verbindung stehen, also Teil der Simulationsumgebung sein. Es besteht so die Möglichkeit den Prozessor über eine FPGA-Schaltung zu entlasten, da diese z.B. Teilaufgaben übernehmen kann, die ansonsten direkt ein Prozessor der Prozessorschaltung abarbeiten müsste.

Das jeweilige zuvor genannte "in-Verbindung-stehen" kann durch direkten Anschluss oder auch über Schnittstellen, insbesondere Standard-Schnittstellen, einen Bus oder Netzwerkanbindung erfolgen.

In der vorgenannten bevorzugten Anwendung, aber auch allgemein bei anderen möglichen Anwendungen kann die Anforderung auftreten, dass mehrere elektrische Signale gleichzeitig über mehrere Kanäle der Schaltung ausgegeben werden müssen und/oder dass mehrere Signale nach einer Erfassung über mehrere Kanäle gleichzeitig weiterverarbeitet werden müssen.

Dies ist insoweit problematisch, da die Signallaufzeiten, die sogenannten Latenzen über verschiedene Kanäle unterschiedlich sind, selbst bei Kanälen gleicher Art und Funktion, weil selbst funktionsidentische elektrische Schaltkreise z.B. aufgrund von Serienstreuung bei der Herstellung, keine identischen Latenzen aufweisen.

Es stellt somit ein erhebliches technisches Problem dar, an den Pins (den physikalischen Anschlussstellen der Kanäle) oder Registern/Speichern von mehreren Ausgabekanälen nach Durchlaufen der Kanalfunktion, z.B. einer Digital-Analog-Wandlung, Signale, bevorzugt elektrische Signale gleichzeitig zur Verfügung zu stellen, selbst wenn ursprüngliche Signale vor Durchlaufen der Kanalfunktion eingangsseitig gleichzeitig an die Kanäle angelegt wurden bzw. die an den Pins/Registern mehrerer Eingangskanäle bevorzugt synchron anliegende Signale zu erfassen und nach Durchlaufen der Kanalfunktion, wie z.B. einer Analog-Digital-Wandlung die auf dem Ergebnis der Kanalfunktion resultierenden Signale synchron, d.h. gleichzeitig für eine Weiterverarbeitung bereit zu stellen, da die jeweiligen Kanalergebnisse zeitlich unterschiedlich vorliegen werden.

Derzeit sind Benutzer bei der Realisierung einer synchronen Ein-/Ausgabe bzw. Weiterverarbeitung auf eine manuelle Vorgehensweise angewiesen. Um die Latenzen durch die Kanäle einer eingangs genannten Schaltung und einer vor- oder nachgelagerten Schaltung, wie z.B. einer FPGA-Schaltung oder einer Prozessorschaltung zu ermitteln muss nach bisherigem Stand der Technik für jede eingesetzte Eingabe / Ausgabe - Schaltung der Simulator, d.h. die genannte Ein-/Ausgabe-Schaltung und vor- bzw. nachgelagerte Schaltungen experimentell für jeden Kanal vermessen werden.

Alternativ können Benutzer das Datenblatt einer Schaltung verwenden, das Schaltzeiten von digitalen, bzw. Wandlerzeiten von analogen Ein-/Ausgängen angibt. Mit Kenntnis der Zeiten muss der Benutzer nun zur (vermeintlich) synchronen Abtastung/Ausgabe seine IO-Kanäle zu unterschiedlichen Zeitpunkten triggern, da Wandler Typ 1 z.B. 500ns Wandlungszeit hat, Typ 2 aber nur 300ns.

Sobald das Simulationsmodel mit einer anderen Ein-/Ausgabe-Schaltung mit anderen technischen Daten betrieben werden soll, ist das Model erneut aufwendig von Hand anzupassen, um die Kanäle (vermeintlich) synchron zu betreiben.

Der Benutzer hat weiterhin derzeit keine Kenntnis, welche zusätzliche Latenz die Signale durch parallele oder serielle Busse oder sonstige Schnittstellen- oder Netzwerkverbindungen erhalten, durch welche z.B. eine Ein-/Ausgabe-Schaltung mit einer vor- oder nachgelagerten Schaltung (z.B. FPGA- oder Prozessorschaltung) verbunden sein kann.

Im Falle serieller oder komprimierter Übertragung kann sogar ein Jitter auftreten. Eine vollständig synchrone Ausgabe ist somit derzeit nicht möglich. Ein Nutzer kann die Latenzen ggfs. noch per Oszilloskop vermessen, den Jitter kann er aber nicht kompensieren.

Während auch heute schon oft die Möglichkeit besteht mehrere Eingänge oder Ausgänge eines Kanaltypen (mit vermeintlich einheitlicher Wandlerzeit) synchron zu betreiben, so ist dies Kanaltyp-übergreifend nicht ohne weiteres möglich.

Nach Messung der Latenzen gemäß Stand der Technik und auch bei der nachfolgend beschriebenen erfindungsgemäßen Lösung können für die synchrone Ausgabe über Ausgabekanäle der Schaltung die Daten zum Ausgleich der Latenzunterschiede zwischen den mehreren Kanälen entsprechend verzögert von einer vorgelagerten Schaltung, z.B. einer FPGA-Schaltung oder einer Prozessorschaltung zu den Ausgabekanälen losgeschickt werden, also insbesondere zur Eingangsseite bzw. einer Eingangsstufe (z.B. einem Register) von Ausgabekanälen auf der genannten Ein-/Ausgabeschaltung.

Solche Vermessungen des Simulators und das manuelle Einstellen der Verzögerungen sind aufwendig und werden daher nur in Ausnahmefällen umgesetzt.

Falls auf dem Übertragungsweg von einer vorgelagerten Schaltung (z.B. FPGA) zum Ausgabekanal der Schaltung (IO-Board) zusätzlich Jitter auftreten kann, müssen die Signale bzw. dadurch repräsentierte Daten auf der Schaltung zwischengespeichert und eine synchrone Weiterverarbeitung auf der Schaltung (IO-Board) nach der maximal möglichen Latenz getriggert werden. Dies verzögert wieder die Ausgabe aller Daten.

Bei der synchronen Abtastung, d.h. Erfassung von Signalen werden die Signale bzw. Daten gemäß bisherigem Stand der Technik nach der Übertragung von der Schaltung (IO-Board) zur nachgelagerten Schaltung (z.B. FPGA-Schaltung oder Prozessorschaltung) zwischengespeichert, um sicherzustellen, dass synchron aufgenommene Signale / Daten trotz unterschiedlicher Latenzen und ggfs. Jitter gemeinsam in der nachgelagerten Schaltung (z.B. FPGA oder Prozessorschaltung) weiterverarbeitet werden.

Bei bekannten Jitter-freien Latenzen lassen sich die Latenzunterschiede in der nachgelagerten Schaltung (z.B. FPGA) ausgleichen, allerdings müssen dafür die Latenzen wie bei der Ausgabe zuvor experimentell und manuell bestimmt werden.

Der Ausgleich von Latenzunterschieden und gffs. Jitter geht im Allgemeinen mit Geschwindigkeitseinbußen einher, da ein Ein- bzw. Ausgabekanal mit der größten Latenz und/oder größtem möglichen Jitter die erreichbare Geschwindigkeit vorgibt. Der Nutzer muss sich also entscheiden, ob er die Daten möglichst schnell oder mit mehr Aufwand später synchron ausgeben möchte.

Das bisherige Vorgehen hat zur Folge, dass heute Latenzen und ggfs. Jitter nur in Ausnahmefällen ausgeglichen werden. Ein-/Ausgabekanäle des gleichen Typs werden vereinfacht als inhärent synchron genug angenommen. Dem notwendigen Aufwand für die bessere Synchronität unterschiedlicher Ein-/Ausgabekanäle, steht häufig kein entsprechender Gewinn gegenüber.

Vor den Hintergrund der geschilderten Probleme ist es eine Aufgabe der Erfindung die unvermeidlichen Latenzen in den Kanälen eingesetzter Hardwarekomponenten, insbesondere in den Ein-/Ausgabe-Schaltungen, die mit zu testenden Steuergeräten in einer Simulationsumgebung in Verbindung stehen, automatisiert zu berücksichtigen, insbesondere also die individuellen Latenzbestimmungen experimenteller Art vor einer Nutzung der Schaltung entbehrlich zu machen. Eine Berücksichtigung von Latenzen soll dabei automatisiert und abhängig davon erfolgen, welche Kanäle von allen Kanälen für eine synchrone Eingabe bzw. Ausgabe von Signalen bestimmt sind.

Diese Aufgabe wird gelöst durch die Zusammenfassung einer Anzahl von Kanälen, insbesondere einer Teilanzahl aller Kanäle der Schaltung, welche Eingangs- und/oder Ausgangskanäle umfasst, zu einer logischen Gruppe, Abfrage der Kanallatenz eines jeden zur Gruppe gehörigen Kanals aus einer Datenquelle, Ermittlung der größten Kanallatenz aus allen abgefragten Kanallatenzen und zumindest zeitweise Speicherung der größten Kanallatenz als Gruppenlatenz. Weiterhin wird für jeden zur Gruppe gehörenden Kanal eine Bestimmung des zeitlichen Differenzbetrages zwischen der Gruppenlatenz und der abgefragten Kanallatenz des jeweiligen Kanals durchgeführt und der ermittelte Differenzbetrag gespeichert als kanalzugehöriger Latenzoffset in einem Speicher, insbesondere einem Speicher der Schaltung. Erfindungsgemäß wird sodann der Signallauf über einen jeweiligen Kanal in Abhängigkeit zumindest von dessen jeweiligem gespeicherten Latenzoffset beeinflusst.

Es ist der wesentliche Kerngedanke der Erfindung, dass es nur noch einer Bestimmung derjenigen Kanäle bedarf, die synchronisiert werden sollen, was z.B. der Benutzer im Softwaremodell der Simulationsumgebung, z.B. in einer bevorzugt grafischen Benutzeroberfläche vornehmen kann, indem diese dort zu einer Gruppe zusammengefasst werden.

Die Simulationsumgebung selbst übernimmt hiernach die Synchronisierung durch automatische Berücksichtigung der individuellen Latenzen der jeweiligen zur Gruppe zusammengefassten Kanäle. Dafür sieht die Erfindung vor, dass die Latenzen jedes Kanals einer Schaltung in einer Datenquelle zur Abfrage und Verwendung zur Verfügung steht.

Somit besteht keine Notwendigkeit mehr, dass Nutzer einer Simulationsumgebung die Latenzen selbst ausmessen oder aus Datenblättern händisch übernehmen und bei der Programmierung berücksichtigen. Der Inhalt der Datenquelle, also die darin für jeden Kanal gespeicherten Latenzen, wird erfindungsgemäß durch den Hersteller einer Schaltung bereitgestellt, besonders bevorzugt für jede Schaltung individuell, also selbst für verschiedene technisch baugleiche Schaltungen. Hierfür können die zu einer Schaltung gehörigen Latenzen der Kanäle, bzw. diese repräsentierende Daten anhand eines Schaltungsidentifikators, wie z.B. der individuellen Seriennummer aus der Datenquelle ermittelt werden, insbesondere sofern nicht die Datenquelle insgesamt schon zur Schaltung individualisiert zugeordnet ist.

Durch die Erfindung können so dem Modellierungs- oder Konfigurationstool der Simulationsumgebung, z.B. deren grafischer Benutzeroberfläche also z.B. direkt vom Hersteller bereits die Latenzen der einzelnen Kanäle bekannt gemacht werden. Wenn somit ein Nutzer eine synchrone Ausgabe oder Abtastung der Signale/Daten von mehreren Kanälen wünscht, wird eine entsprechende Verzögerung der Signale/Daten zum Ausgleich der Latenzen automatisch durch das Tool modelliert. Eine solche Verzögerung orientiert sich dabei an der maximalen Latenz aus den Latenzen aller Kanäle, welche die Gruppenlatenz definiert und erfindungsgemäß automatisch bestimmt wird.

Die Erfindung kann bevorzugt vorsehen, dass zumindest ein jeweiliger Wert für die jeweilige Kanallatenz und die Gruppenlatenz in einem Kanalobjekt visualisiert wird, insbesondere welches bei der Programmierung, bevorzugt einer objektorientierten grafischen Blockprogrammierung, bevorzugt innerhalb einer grafischen Benutzeroberfläche genutzt wird. Der Nutzer kann die so erhaltenen Information bei seiner Programmierung unmittelbar nutzen und berücksichtigen. Beispielsweise kann der Nutzer so einfach entscheiden für welche Kanäle er eine synchrone Ausgabe oder Eingabe/Abtastung möchte und erkennen, welche zusätzlichen Verzögerungen dies für die einzelnen Kanäle bedeutet.

Die Erfindung sieht bevorzugt vor, dass die Zuordnung eines jeweiligen Kanals zu einer Gruppe durch Speicherung einer Gruppenidentifikation in einem dem jeweiligen Kanal zugeordneten Kanalobjekt einer Benutzeroberfläche erfolgt. Eine Gruppenidentifikation kann in bevorzugter Ausführung z.B. eine Gruppennummer sein. Verschiedene Kanalobjekte, die bei der Programmierung verwendet werden, erhalten so eine logische Verknüpfung miteinander, die durch das Softwaremodell der Simulationsumgebung unmittelbar berücksichtig werden kann. Als Benutzeroberfläche kann bei der Erfindung allgemein bevorzugt eine grafische Benutzeroberfläche (GUI) eingesetzt werden.

Die Zuordnung eines Kanals zu einer Gruppe kann auch erfolgen durch Erzeugen eines Gruppenobjektes und Speicherung eines Kanalobjektes des jeweiligen Kanals im Gruppenobjekt der bevorzugt grafischen Benutzeroberfläche. Hierdurch kann sich bevorzugt auch eine hierarchische Ineinanderanordnung ergeben, welche dem Benutzer, insbesondere bei der bevorzugten grafischen Benutzeroberfläche, sofort auch in visuell einfach verständlicher Form die Gruppenzuordnung darlegt und für das Softwaremodell die Zuordnung intern über das gemeinsame Gruppenobjekt definiert.

Eine Weiterbildung kann auch vorsehen, dass in Abhängigkeit einer Gruppenlatenz ein Aktivitätssignal generiert wird, welches den Zeitpunkt angibt bzw. signalisiert, wann die Kanäle der Gruppe an ihren jeweiligen Kanalanschlüssen/Pins oder dem einem Kanal zugeordneten Speicher/Register ein aktives Signal aufweisen. Bevorzugt kann dabei das Aktivitätssignal dem Kanalobjekt und/oder Gruppenobjekt zugeordnet sein, z.B. als Objekt, insbesondere mit dem weitere Verknüpfungen möglich sind.

Eine solche Zuordnung kann vorsehen, dass das Aktivitätssignal als ein im Wert änderbarer Parameter oder eine Variable innerhalb des Kanal- oder Gruppenobjektes zur Verfügung steht, insbesondere somit hiermit auch Verknüpfungen zu anderen Objekten hergestellt werden können. Ein solcher Wert kann z.B. eine logische "1" oder "0" annehmen, wobei die "1" die Aktivität anzeigen kann. So kann ein solches Aktivitäts-Signal z.B. auch dazu dienen, andere Programmteile, z.B. Unterroutinen oder Objekte zu triggern, was den Vorteil hat, dass eine Abarbeitung genau dann starten kann, wenn das Signal vorliegt.

Bei Ausgabekanälen kann das Signal somit anzeigen, wann an allen Kanälen, bzw. deren Ausgangsanschlüssen, insbesondere Pins oder Registern der Gruppe die jeweiligen Ausgangsignale anliegen. Bei Eingangskanälen kann das Signal anzeigen, wann an allen Kanälen die eingangsseitig vorliegenden Signale nach Durchlaufen der Kanalfunktion an der Kanalausgangsseite, z.B. in einem Speicher/Register oder ebenso einem Pin anliegen, also einer synchronen Weiterverarbeitung zugeführt werden können. Zusätzlich kann der Samplezeitpunkt der Signale am Pin vor dem Durchlaufen der Kanalfunktion durch ein weiteres Aktivitäts-Signal angezeigt werden. Durch dieses Signal kann besser bestimmt werden, zu welchem Zeitpunkt eine Messung vorgenommen wurde.

Besonders bei Ausgangskanälen kann ein solches Aktivitätssignal somit auch anzeigen, wann bisherige bei einem jeden Ausgangskanal der Gruppe gespeicherte Werte durch neue Werte überschrieben wurden, so dass bei Berücksichtigung dieses Signals zur Triggerung weiterer Programmteile sicher gestellt werden kann, dass die Abarbeitung mit den neuen aktuellen Werten stattfindet.

Es kann auch vorgesehen sein für Ausgangskanäle und Eingangskanäle verschiedene Aktivitätssignale bereitzustellen, insbesondere wenn in einer möglichen Ausgestaltung der Erfindung in einer Gruppe Ausgangs- und Eingangskanäle gemischt vertreten sind.

Die Erfindung kann weiterhin vorsehen, dass zu wenigstens einem der Kanäle der Gruppe ein Kanaloffset im Kanalobjekt gespeichert wird, mit welchem eine beabsichtigte Abweichung des Signallaufes über den Kanal von der Gruppenlatenz definiert wird. So kann der Nutzer über einen solchen Kanaloffset bewusst eine Abweichung für diesen wenigstens einen Kanal von der sonstigen Synchronität erreichen. Ein solcher Kanaloffset kann somit eine Variable im Kanalobjekt darstellen, die der Nutzer individuell mit einem gewünschten Wert belegen kann. Der Kanaloffset kann positive oder negative Zeitwerte aufweisen, insbesondere also ein Signal an einem solchen Kanal relativ zur Gruppenlatenz in beide möglichen Richtungen verschieben.

Bei der Durchführung des Verfahrens ist es vorgesehen, dass zumindest die zuvor genannten erfindungsgemäßen Schritte der Definition der Gruppe, Abfrage der Kanallatenz, Ermittlung der größten Kanallatenz und Speicherung der kanalzugehörigen Latenzoffsets mittels der bevorzugt grafischen Benutzeroberfläche erfolgen, die durch Software auf einer Datenverarbeitungsanlage implementiert ist, die durch wenigstens eine Kommunikationsverbindung, bevorzugt bidirektional, mit der Schaltung verbunden ist, welche die Eingangs- und/oder Ausgangskanäle umfasst.

Diese Kommunikationsverbindung kann innerhalb des Simulators ausgebildet sein oder auch extern ausgebildet sein, z.B. über eine Netzwerk- oder eine Schnittstellen- bzw. Busverbindung. Durch diese Ausgestaltung werden die Latenzwerte der Kanäle direkt bei der Programmierung der Simulationsumgebung bzw. des Simulators zugänglich.

Der Schritt der Beeinflussung des Signallaufes über den jeweiligen Kanal einer gebildeten Gruppe wird erfindungsgemäß durch eine Software oder eine in Hardware realisierte Logik einer Schaltung durchgeführt, an welche die Latenzoffsets aller Kanäle der Gruppe durch vorherige Kommunikation übermittelt wurden.

Die Software kann gebildet werden durch das Simulationsmodell, welches bevorzugt in Echtzeit die Simulation rechnet und Signale, z.B. solche an ein Steuergerät, generiert oder Signale z.B. von einem Steuergerät empfängt, jeweils unter Zwischenschaltung der genannten Ein-/ Ausgabeschaltung.

Eine in Hardware realisierte Logik kann direkt auf der genannten Ein-/Ausgabeschaltung ausgebildet sein oder aber auf einer separaten Schaltung, z.B. einer separaten FPGA-Schaltung im Simulator, die mit der genannten Ein-/Ausgabeschaltung kommunikativ in Verbindung steht, insbesondere über die zuvor genannten Netzwerk-, Schnittstellen- oder Busverbindung.

Sowohl die Software als auch die in Hardware realisierte Logik kann z.B. bei Ausgaben die Ansteuerung der Kanäle in Abhängigkeit der jeweiligen Kanallatenzen verzögern, wobei sich die Verzögerung an dem eingangs genannten Latenzoffset orientiert. Hierfür können die auszugebenden Signale z.B. mit jeweiligen von den Latenzoffsets abhängigen Verzögerungen an die Eingangsseiten, z.B. Eingangsstufen der Ausgabekanäle der Schaltung übertragen werden.

Hier kann es auch vorgesehen sein, die auszugebenden Signale alle an Zwischenregister der Schaltung zu übertragen, in welchem sie zwischengespeichert bleiben bis zum Ablauf einer Verzögerungszeit, die einen maximal möglichen Jitter, z.B. auf der Verbindungsstrecke berücksichtigt. So wird sichergestellt, dass selbst unter Wirkung eines Jitters alle Signale das Zwischenregister erreicht haben, bevor die eigentliche Ausgabe über die Kanäle gestartet wird. Nach diesem Starten werden sodann die Ausgabekanäle jeweils getriggert unter Berücksichtigung, insbesondere in Abhängigkeit der Latenzoffsets jedes Kanals, wie es beschrieben wurde und insbesondere gemäß Anspruch 10 Alternative a).

Hier kann es vorgesehen sein, dass alle Signale/Daten für alle gruppierten Kanäle in einen Zwischenspeicher geschoben werden und eine programmierbare Logik, bspw. ein FPGA, für einen jeweiligen Kanal vorgesehene Signal bzw. die vorgesehen Daten nach einer Triggerung zu dem jeweiligen Kanal herausschiebt. Hierbei kann die programmierbare Logik die Kanallatenzen und gewünschten Offsets beachten. Insbesondere arbeiten hierdurch die Kanäle zwar alle hinsichtlich der Kanalfunktion parallel, der Zwischenspeicher kann aber seriell an die Schaltung angebunden sein.

Bei Eingaben hingegen können durch die Software oder Logik die jeweiligen Signale, insbesondere die durch die Kanalfunktionen behandelten Signale, nach Ablauf einer Zwischenspeicherungszeit, z.B. in einem Register, gemeinsam abgerufen werden, wobei die Zwischenspeicherungszeit den Wert der Gruppenlatenz berücksichtigt, insbesondere wenigstens der Gruppenlatenz entspricht.

Der Ausgleich der Latenzunterschiede, insbesondere durch kanalindividuelle Verzögerung bei Ausgaben oder kanalindividuellen Zwischenspeicherungszeiten bei Eingaben kann in einer Ausgestaltung auch direkt auf der Ein-/Ausgabe-Schaltung (IO-Board) durchgeführt werden, insbesondere, wenn direkt dort eine in Hardware realisierte, bevorzugt programmierbare Logik (z.B. als FPGA) oder eine von einem lokalen Prozessor ausgeführte Software vorliegt, die den Signallauf zwischen Kanaleingangsseite und -ausgangsseite beeinflusst.

Besonders hierbei kann auch die Speicherung der festgestellten Latenzoffsets in einem Speicher direkt auf der genannten Schaltung erfolgen. Die Erfindung kann hier vorsehen, dass die programmierbare Logik auf der Schaltung oder die lokale Software zur Beeinflussung des Signallaufes direkt in Abhängigkeit der Latenzoffsets für jeden Kanal oder zumindest für jeden zu einer Gruppe zugeordneten Kanal auf der Schaltung programmiert wird, um dessen Signallauf mit den anderen Kanälen der gebildeten Gruppe zu synchronisieren.

Diese Ausführung ist besonders vorteilhaft, wenn die Ein-/Ausgabeschaltung nicht direkt im Simulator an der Prozessorschaltung oder an einer programmierbaren bzw. programmierten Logik (FPGA-Schaltung) angeordnet ist, sondern die Verbindung über wenigstens einen Kommunikationsweg erfolgt, wie Netzwerk-, Bus- oder Schnittstellenverbindung.

Eine Zwischenspeicherung von Signalen mehrerer Kanäle vor einer Weiterverarbeitung (Ausgabe oder Eingabe) ermöglicht auch zusätzlich den Ausgleich von Jitter zwischen einer vor- oder nachgelagerten Schaltung (z.B. FPGA-Schaltung) und der Ein-/Ausgabe-Schaltung (IO-Board). Für einen solchen Jitter-Ausgleich ist bevorzugt der Simulationsumgebung der maximal mögliche Jitter zwischen einer vor- oder nachgelagerten Schaltung (FPGA) und der Ein-/Ausgabe-Schaltung bekannt.

Besonders bei einer Ausbildung einer vor- oder nachgelagerten Schaltung als programmierbare Logik (FPGA), welche an die Ein-/Ausgabe-Schaltung Signale zur synchronen Ausgabe übermittelt oder mehrere Signale synchron von der Ein-/Ausgabe-Schaltung empfängt, kann die Erfindung vorsehen, dass die Abarbeitung der erfindungsgemäßen Verfahrensschritte zumindest teilweise, ggfs. vollständig durch die programmierbare Logik erfolgt, wofür eine Implementation der Verfahrensschritte in einer FPGA-Programmierumgebung erfolgen kann, bevorzugt ebenso block- und/oder objektbasiert.

Die eingangs genannte Datenquelle zur Abfrage der darin gespeicherten Kanallatenzen kann in einer möglichen Ausführung gebildet werden durch einen Satz von einem jeden Kanal zugeordneten Daten, die auf der Datenverarbeitungsanlage, also bevorzugt der Simulationsumgebung, insbesondere als Datei, gespeichert sind, auf welcher die bevorzugt grafische Benutzeroberfläche ausgeführt wird und die in die Software zur Generierung der Benutzeroberfläche eingelesen werden.

Die kanalzugeordneten Daten können z.B. als eine Bibliothek auf der Datenverarbeitungsanlage vorliegen und aus dieser ausgelesen werden in Abhängigkeit der verwendeten Ein-Ausgabe-Schaltung, z.B. abhängig von einem Identifikator der Schaltung.

Es kann auch vorgesehen sein, dass die Datenquelle gebildet wird durch einen Satz von kanalzugeordneten Daten, die in einem Speicherelement, insbesondere einem für alle Kanäle gemeinsamen Speicherelement, auf der Schaltung gespeichert sind, aus welchem die Daten ausgelesen und durch Kommunikation übertragen werden an die Software zur Generierung der Benutzeroberfläche.

So kann jede Schaltung die sie betreffenden Latenzwerte immer mit sich tragen, insbesondere wenn der Hersteller der Schaltung die Kanallatenzen nach Vermessung der Schaltung auf dem lokalen Speicher der Schaltung zum Abruf hinterlegt hat.

Eine Ausführung kann vorsehen, dass die Datenquelle gebildet wird durch einen Satz von kanalzugeordneten Daten der über ein Kommunikationsnetzwerk von einem Server, insbesondere von einem Server des Schaltungsherstellers, auf die Datenverarbeitungsanlage geladen wird, auf welcher die bevorzugt grafische Benutzeroberfläche ausgeführt wird und die in die Software zur Generierung der Benutzeroberfläche eingelesen werden oder aber auf einen Speicher der Schaltung geladen wird. Besonders die erstgenannte Alternative hat den Vorteil, dass kein Speicherbereich auf der Schaltung zur Vorhaltung der Daten bereitgestellt werden muss. Bei dieser Ausführung kann das Laden der Daten vom Server in Abhängigkeit eines Schaltungsidentifikators erfolgen, z.B. einer Seriennummer.

Es kann auch vorgesehen sein, dass die Datenquelle gebildet wird durch einen Satz von Daten, die direkt von einem Benutzer der Software zur Generierung der Benutzeroberfläche in diese Software eingegeben werden.

Allgemein bei Benutzung einer jeweiligen Kanalfunktion und insbesondere bei der Durchführung einer Simulation zum Testen eines Steuergerätes kann die Erfindung vorsehen, dass an einem initialen Triggerzeitpunkt eine initiale Triggerung der Funktion desjenigen Kanals der definierten Gruppe mit der größten abgefragten Kanallatenz erfolgt zur Auslösung einer Signalverarbeitung mit diesem Kanal, insbesondere gemäß dessen konkreter Funktionalität, und eine sukzessive Triggerung erfolgt von der Funktion der verbleibenden Kanäle der Gruppe zur Auslösung einer Signalverarbeitung mit dem jeweiligen Kanal in der Reihenfolge abnehmender abgefragter Kanallatenzen im zeitlichen Abstand von deren jeweiligem gespeicherten Latenzoffset. Eine solche Ausführung wird insbesondere bei der Ausgabe von Signalen über Ausgabekanäle erfolgen. Die sukzessive Triggerung der nachfolgenden Kanäle kann mittels eines jeweiligen Zeitgliedes realisiert werden, dass zum initialen Triggerzeitpunkt mit dem betreffenden Latenzoffset geladen ist und die Zählung startet, wobei nach Herunterzählen der betreffende Kanal zeitlich versetzt um den Latenzoffset getriggert wird.

Die Erfindung kann hierbei vorsehen, dass eine vorgenannte jeweilige Triggerung nicht unmittelbar die Kanalfunktion auslöst, sondern nur mittelbar. Z.B. kann die Triggerung auch eine dem Kanal vorgelagerte programmierbare Logik ansteuern, die sodann ein für den betreffenden Kanal vorgesehenes Signal bzw. vorgesehene Daten aus einem Zwischenspeicher in die Eingangsstufe des Ausgangskanals übergibt, der sodann hiernach die Kanalfunktion startet. Hierbei kann die programmierbare Logik die Kanallatenzen und gewünschten Offsets beachten.

Allgemein können bei der Triggerung Triggerzeitpunktverschiebungen in Abhängigkeit von positiven oder negativen Kanaloffsets insbesondere relativ zum initialen Triggerzeitpunkt erfolgen. Solche Kanaloffsets kann z.B. ein Nutzer - wie eingangs erwähnt - in einem Kanal- oder Gruppenobjekt definiert haben.

Die Erfindung kann auch vorsehen, dass die Funktionen aller Kanäle der Gruppe zur Verarbeitung jeweiliger Signale zeitgleich getriggert werden und die durch die Kanalfunktion verarbeiteten Signale jeweils in einem Register zwischengespeichert werden und aus dem Register heraus das verarbeitete Signal jedes Kanals verzögert mit dem jeweiligen gespeicherten Latenzoffset, insbesondere zuzüglich eines positiven oder negativen Kanaloffsets, einer Weiterverarbeitung zugeführt wird. Eine solche Weiterverarbeitung kann auch getriggert ausgeführt werden, z.B. in Abhängigkeit des Ablaufes der längsten Verzögerungszeit bzw. der Gruppenlatenz und/oder in Abhängigkeit eines vorgenannten Aktivitätssignals. Ein solcher Trigger kann bewirken, dass alle verarbeiteten Signale aus einen Zwischenspeicher synchron abgeholt werden, um die Weiterverarbeitung vorzunehmen. Solche Ausführungen werden somit insbesondere bei der Erfassung von Signalen über Eingangskanäle erfolgen und stellen hierbei sicher, dass nach der Erfassung an der Ausgangsseite aller gruppierten Kanäle die verarbeiteten Signale synchron einer Weiterverarbeitung zugeführt werden können.

Die Erfindung kann vorsehen, die zuvor genannte Einzeltriggerung der verschiedenen Kanäle unter Berücksichtigung der Latenzoffsets der Kanäle durch eine vor- oder nachgelagerte Schaltung vorzunehmen, wie die genannte Prozessorschaltung oder auch die FPGA-Schaltung. Diese Bereitstellung mehrerer Triggersignale erfolgt vorteilhaft dann, wenn die Schaltung mit den Eingangs-/Ausgangskanälen direkt an der vor- oder nachgelagerten Schaltung angebunden ist, also z.B. in derselben Datenverarbeitungsanlage, welche die Simulation rechnet.

Die Erfindung kann auch vorsehen ein Gruppentriggerungssignal bereitzustellen, welches einen Triggerzeitpunkt definiert, der die Kanalfunktionalitäten aller Kanäle der Gruppe synchron auslösen soll, insbesondere direkt oder auch indirekt nach zuvor ausgelösten Aktionen. Ein solches Gruppentriggerungssignal kann in dem Softwaremodell der Simulation gebildet werden und programmtechnisch z.B. eine Objektvariable eines Gruppen- und/oder jeden Kanalobjektes sein.

Diese Ausführung hat besonders dann Vorteile, wenn eine Schaltung mit Ein- und/oder Ausgabekanälen durch eine Kommunikationsverbindung, wie z.B. eine Schnittstellenverbindung, Netzwerkverbindung oder Busverbindung an eine vor- oder nachgelagerte Schaltung angebunden ist. In diesem Fall muss zur zeitlich synchronen Auslösung aller gruppierten Kanalfunktionen nur ein einziges Signal an die Schaltung mit den Kanälen übertragen werden.

Auf der Schaltung mit den Kanälen kann, unabhängig von der Art der Anbindung an diejenige Schaltung, welche das Gruppentriggersignal versendet, nach Empfang des Gruppentriggerungssignals die Kanalfunktion jedes Kanals der Gruppe ausgelöst werden.

Dafür kann es auch vorgesehen sein, dass das empfangene Gruppentriggerungssignal in Einzeltriggersignale für jeden Kanal umgesetzt wird, wobei in jedes gebildete Einzeltriggersignal der bevorzugt auf der Schaltung gespeicherte jeweilige Latenzoffset eingeht, insbesondere wie es zuvor beschrieben wurde. Die Umsetzung erfolgt direkt auf der Schaltung, z.B. mittels einer dort in Abhängigkeit der gespeicherten Latenzoffsets programmierten Logik oder Software. Die Ausführung ist besonders vorteilhaft bei einer bestehenden Kommunikationsverbindung zwischen den Schaltungen, insbesondere per Netzwerk, Schnittstelle, bevorzugt serieller Schnittstelle oder Bus.

Die Erfindung kann auch vorsehen, dass statt in einer Gruppe nur Ausgabekanäle oder nur Eingangskanäle logisch zusammenzufassen auch eine Mischung von sowohl Ausgangs- als auch Eingangskanälen in der Gruppe vorliegen. Bei einer solchen Ausführung können in Abhängigkeit der Gruppenlatenz Trigger zum Ausgeben von Signalen und Trigger zum Starten einer synchronen Weiterverarbeitung von erfassten Signalen ausgelöst werden. Diese beiden verschiedenen Trigger (Einlesen und Ausgeben) können zeitgleich ausgelöst werden oder mit einem zeitlichen (positiven oder negativen) Offset zueinander. Um einen Offset zu berücksichtigen kann in einem Gruppenobjekt ein solcher Offset gespeichert werden, insbesondere zugeordnet zu den Ausgabekanälen oder Eingabekanälen der Gruppe.

Allgemein ist hinsichtlich der Kanallatenz festzuhalten, dass sich diese aus mehreren Latenzen zusammensetzen kann. Beispielsweise kann zur Bildung eines Wertes für eine Kanallatenz die Zeit für die Signalkonditionierung in dem Kanal und die Zeit für den Transfer des Signals über den Kanal addiert werden.

Eine Ausführung kann auch vorsehen zu den Latenzen, die aus der Datenquelle für jeden Kanal ermittelt werden weitere Latenzwerte zu addieren, z.B. solche die sich durch die Übertragungszeiten auf einem Verbindungsweg zwischen der Schaltung mit den Ein- und/oder Ausgabekanälen und einer vor- oder nachgelagerten Schaltung ergeben. Ein solcher zusätzlicher Latenzwert kann zwar nicht aus der Datenquelle ausgelesen werden, aber z.B. experimentell ermittelt werden durch das zeitliche Vermessen der Verbindung, z.B. mittels dem "Pingen" des Verbindungsweges.

Ausführungsbeispiele der Erfindung sind nachfolgend beschrieben.

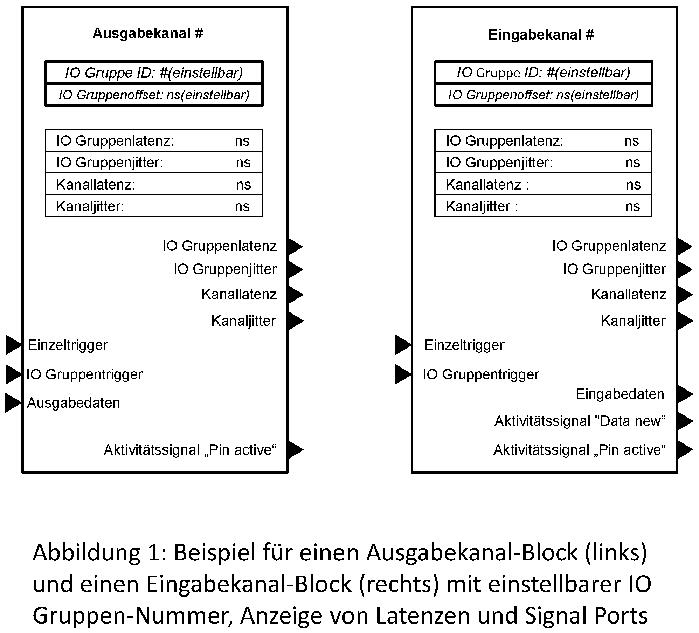

Figur 1 visualisiert die Zusammenfassung von mehreren Kanälen einer Schaltung mit Eingangs- und/oder Ausgangskanälen zu einer Gruppe. Dargestellt ist die Anordnung von Blocks in einer grafischen Benutzeroberfläche der Programmierumgebung einer Simulationsumgebung. Der Block links repräsentiert das Objekt eines Ausgangskanals und der Block rechts das Objekt eines Eingangskanals. Sofern diese Kanäle synchron betrieben werden sollen kann der Benutzer die Kanäle zu einer logischen Gruppe zusammenfügen. Eine solche Gruppe wird nachfolgend als IO-Gruppe bezeichnet. Der Benutzer modelliert somit IO-Gruppen und kann damit angeben, dass die Ausgabe-Daten alle gemeinsam synchron am Pin der Kanäle ankommen sollen, bzw. die Eingabe-Daten alle gemeinsam synchron am Pin erfasst werden, bzw. Synchron nach einer Erfassung weiter verarbeitet werden können. Die Zusammenfassung der Kanäle zu einer logischen Gruppe erfolgt hier gemäß Figur 1 durch die Angabe einer IO-Gruppen-Nummer im jeweiligen Kanalobjekt.

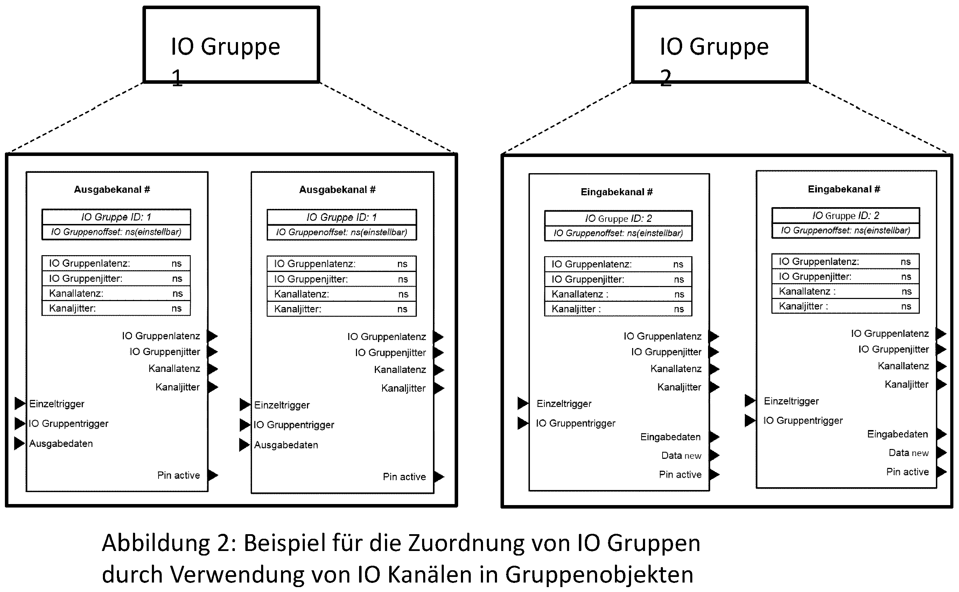

Alternativ kann gemäß Figur 2 eine Zusammenfassung zu einer logischen Gruppe dadurch erfolgen, dass ein Nutzer die Kanalobjekte derjenigen Kanäle, die synchron arbeiten sollen, in einem Gruppenobjekt anordnet, wie es in der Figur 2 durch den die Kanalobjekte umgebenden Rahmen dargestellt wird. Dies verdeutlicht auch die hierarchische Programmierung innerhalb der grafischen Benutzeroberfläche der Programmierumgebung der Simulationssoftware, wie z.B. Simulink.

Anhand der Gruppenzuordnung durch den Nutzer erkennt die Software diejenigen Kanäle für welche erfindungsgemäß aus einer hier nicht gezeigten Datenquelle die Kanallatenzen abgefragt werden. Diese werden hier im Kanalobjekt als Wert visualisiert und aus der wertemäßig größten Kanallatenz aller Kanäle für die gesamte Gruppe die Gruppenlatenz bestimmt, die ebenso hier in dem Kanalobjekt visualisiert wird. Relativ zur Gruppenlatenz wird für jeden Kanal der individuelle Latenzoffset bestimmt und gespeichert, z.B. auf der Schaltung mit den Kanälen.

Der Zeitpunkt, an dem die Signale/Daten am Pin anliegen, wird im Folgenden als $t_{IO\ Pin}$ bezeichnet und entspricht der Gruppenlatenz, sofern die Gruppenlatenz als Verzögerung zum Zeitpunkt t=0 betrachtet würde.

Optional kann zusätzlich pro Kanal einer IO-Gruppe ein positiver oder negativer zeitlicher Offset relativ zur Gruppenlatenz angegeben werden. Dieser wird im Folgenden als $\Delta t_{n\ wOffset}$(Ausgabe-Offset), bzw. $\Delta t_{n\ rOffset}$ (Eingabe-Offset) bezeichnet und ist relativ zu $t_{IO\ Pin}$. Gegenüber dem Ausgabezeitpunkt, der durch die Gruppenlatenz bestimmt ist kann so für einen Kanal eine Verschiebung programmiert werden, um diesen Kanal bewusst von der Synchronität abweichen zu lassen.

Durch die Speicherung der ermittelten Latenzoffsets zu jeden Kanal kann nun erfindungsgemäß bewirkt werden, dass jeder Kanal individuell so angetriggert oder dessen Signallaufzeit so verzögert wird, dass sein Signal synchron mit den Signalen aller anderen Kanäle der Gruppe an den Ausgängen der Kanäle, z.B. Pins anliegt.

Die Erfindung kann hier vorsehen, dass Werte der Kanal- und/oder Gruppenlatenz und des Jitters eines Kanals, bzw. IO-Gruppe angezeigt werden. Diese Anzeige erfolgt im Kanalobjekt bei der Programmierung auf einer bevorzugt grafischen Benutzeroberfläche. Dadurch weiß der Benutzer, wann er die Gruppe anzusprechen hat, um die Signale zu einem von ihm bestimmten Zeitpunkt synchron am IO Pin ein-/auslesen zu können.

Latenz und/oder der Jitter eines Kanals, bzw. einer IO-Gruppe können auch als ein jeweiliges Signal bereitgestellt werden. Somit kann der Benutzer sein Model so generisch erstellen, dass es automatisch auf unterschiedliche Latenz- und/oder Jitterwerte reagieren kann, da diese für die Verarbeitung im Modell und auf der Hardware, die bei der Simulation verwendet wird, bereitstehen. Der Wechsel zwischen unterschiedlichen IO-Kanälen/IO-Boards (die eigentlich zu unterschiedlichen Latenz- und Jitter-Kompensationen führen) erfordert somit keine weiteren Anpassungen am Modell durch den Benutzer.

Dem Benutzer wird insbesondere im Falle der FPGA-Modellierung am Ausgabekanal-Block durch ein "Pin active" benanntes Aktivitätssignal angezeigt, wann die Signale der Gruppe tatsächlich am jeweiligen Pin des Ausgangskanals anliegen.

Bei Eingabekanälen einer IO-Gruppe wird dem Benutzer die Übernahme aller gemäß der Kanalfunktion verarbeiteten Eingangssignale in die jeweiligen Ausgangsstufen der Eingabekanäle der Gruppe z.B. über ein als "Data new" bezeichnetes Aktivitätssignal angezeigt. Zusätzlich kann der Samplezeitpunkt der Signale am Pin durch das Aktivitäts-Signal "Pin active" angezeigt werden.

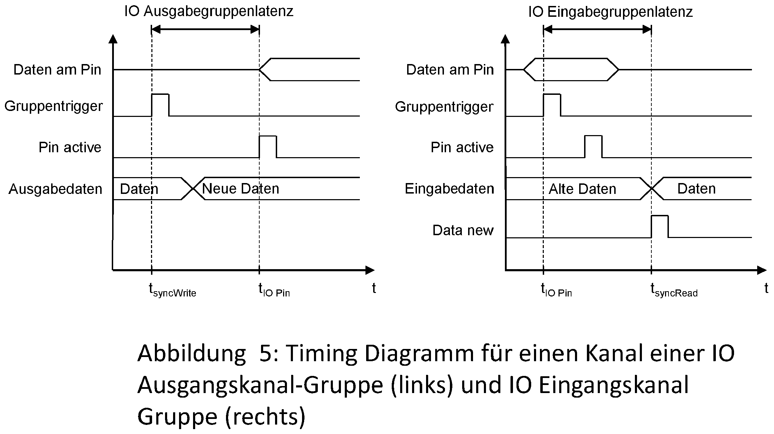

Abbildung 5 veranschaulicht das Timing des "Pin active" Signals, das, wie in Abbildung 1 und Abbildung 2 zu sehen, am Kanalblock rausgeführt wird.

Die Aktivitätssignale "Pin active" und "Data new" können bei der Programmierung hilfreich sein, bspw. können sie weitere Programmteile (bspw. Submodelle) triggern.

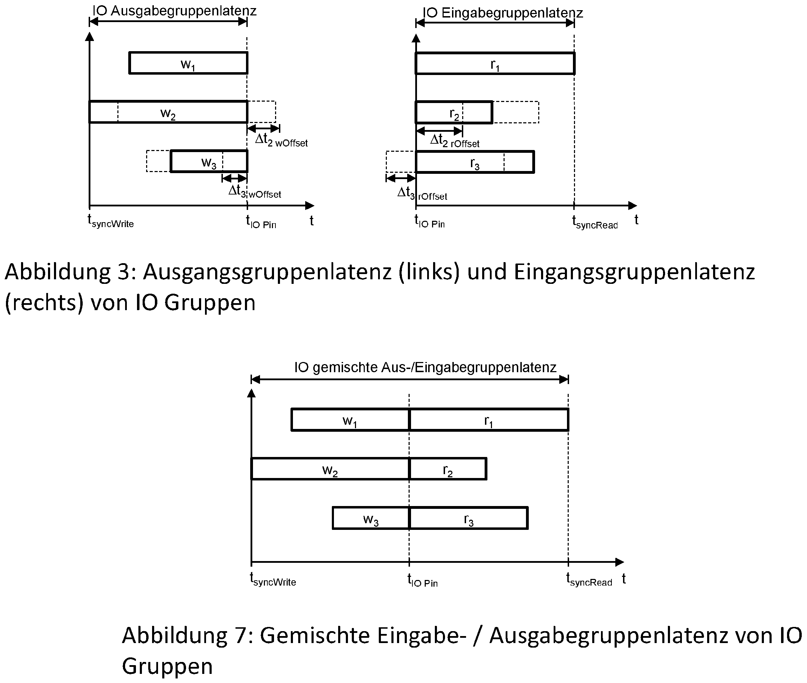

Figur 3 visualisiert das links für exemplarisch drei Ausgangskanäle und rechts für exemplarisch drei Eingangskanäle. Hier ist links erkennbar, dass die Kanäle unterschiedlich verzögert getriggert werden, wobei durch die Kästen die Signallaufzeit symbolisiert dargestellt ist. Der hier mittlere Kanal mit der längsten Signallaufzeit wird unverzögert zum Zeitpunkt $t_{syncWrite}$ gestartet. An dessen initialen Triggerzeitpunkt orientiert sich die Triggerung der weiteren Kanäle zuzüglich des jeweiligen Latenzoffsets. Erkennbar enden alle Kästen rechtseitig zur gleichen Zeit $t_{IO\,Pin}$, d.h. alle Kanäle geben ihre Signale zeitgleich aus, z.B. an ein zu testendes Steuergerät. Durch die dargestellten Offsets wird verbildlicht, dass optional der Nutzer das Kanalverhalten ausgehend von $t_{IO\,Pin}$ zu früheren oder auch späteren Zeiten durch einen zu jedem Kanal individuell zusätzlich programmierbaren Offset verschieben kann.

In der rechten Abbildung ist erkennbar, dass die Kanäle ihre verarbeiteten Signale zum Zeitpunkt $t_{syncread}$ (oberster Kanal) oder je nach Kanallatenz zu verschiedenen Zeiten vor $t_{syncread}$ bereitstellen. Erfindungsgemäß wird die Übernahme der Signale in die weitere Verarbeitung erst vorgenommen nach Ablauf einer Wartezeit, die für die Kanäle verschieden ist und dem genannten jeweiligen kanalzugeordneten Latenzoffset entspricht. Der oberste Kanal mit der längsten Kanallaufzeit bestimmt hier den frühesten möglichen Übernahmezeitpunkt $t_{syncread}$ in die weitere synchrone Verarbeitung.

Das synchrone Lesen von Signalen bzw. Daten in die Eingangsstufen der jeweiligen Eingangskanäle, also das samplen der Signale oder das Lesen aus einem gemeinsamen oder einem jeweiligen Register erfolgt bei $t_{IO\,Pin}$. Die Triggerung der Weiterverarbeitung nach Durchlaufen der Kanalfunktion kann hier nach Ablauf der Gruppenlatenz und somit frühestens zu $t_{syncread}$ erfolgen, wenn alle Kanäle die Kanalfunktion zeitgleich bei $t_{IO\,Pin}$ getriggert gestartet haben.

Der Vorteil der synchronen Weitergabe bei Eingangsdaten im Vergleich zu "jeder Kanal so schnell wie möglich" ist, dass eine nachfolgende Elektronik, z.B. ein Regler immer zu einem bestimmten Zeitpunkt einen neuen Satz an Eingangsdaten erhält. Die synchrone Weitergabe der Eingangsdaten ist jedoch optional und ein Vorteil der Erfindung, der nicht zwingend genutzt werden muss.

Die Figur 3 rechts visualisiert hier jedoch auch einen anderen mit der Erfindung erschließbaren Vorteil, dass nämlich in den Kanallatenzen der Eingangskanäle, insbesondere statt verschiedener Durchlaufzeiten, die verschiedenen Wandlervorlaufzeiten der Kanäle berücksichtigt sind. Insbesondere kann die jeweilige Kanallatenz eines Eingangskanals ausschließlich die individuelle Wandlervorlaufzeit darstellen oder diese zumindest als einen zeitlichen Anteil mit umfassen. So kann mit der Erfindung bewirkt werden, dass in Abhängigkeit der verschiedenen Vorlaufzeiten die Wandlung zu unterschiedlichen Zeiten getriggert wird und hierdurch zum Zeitpunkt $t_{IO\,Pin}$ die Eingangssignale alle synchron in die Wandlerstufen der gruppierten Eingabekanäle übernommen werden.

Hier kann - wie schon zuvor beschrieben - eine Initial-Triggerung bei dem Kanal erfolgen, welcher die größte Kanallatenz (in diesem Fall also größte Wandlervorlaufzeit) hat. Die Triggerung der weiteren Kanäle erfolgt jeweils in einem zeitlichen Abstand zum Initial-Trigger, welcher dem jeweiligen Latenzoffset entspricht. Mit dieser Art der Triggerung kann die synchrone Übernahme der Signale in die jeweiligen Wandlerstufen erreicht werden.

Eine spezielle Ausführung der Erfindung kann sich eine bewusste Abweichung von dieser Synchronität der Signalübernahme in die Wandlerstufen durch Berücksichtigung von individuellen Kanaloffsets zu Nutze machen. Diese kann besonders vorteilhaft z.B. zum zeitlich hochaufgelösten Samplen eines einzigen Signals, bevorzugt analogen und zeitlich variierenden Signals mittels mehreren Eingabekanälen, z.B. A/D-Wandlern, eingesetzt werden, an denen das genannte Signal parallel anliegt.

Zu mehreren Eingabekanälen oder allen Eingabekanälen einer Gruppe können hierbei jeweilige Kanaloffsets eingestellt werden, insbesondere wobei die Kanaloffsets von Kanal zu Kanal äquidistant sind, wodurch bewirkt wird, dass im zeitlichen Abstand der Kanaloffsets das Signal nacheinander in die verschiedenen Wandlerstufen der Eingabekanäle übernommen wird, insbesondere somit also das Signal mit einer zeitlichen Auflösung des (bevorzugt äquidistanten) Kanaloffsets mehrfach gemäß der Anzahl der verwendeten Kanäle gesampelt wird. So können zeitliche Auflösungen bei der Erfassung eines Signals erzielt werden, die deutlich besser sind als die Auflösung, die erreicht würde, wenn derselbe Eingabekanal mehrfach hintereinander getriggert wird.

Die jeweilige Gruppenlatenz ergibt sich aus der größten Latenz unter allen zu der Gruppe zusammengefassten Kanälen.

Wie erwähnt kann ein Benutzer für jeden Kanal einer IO-Gruppe einen positiven Offset (vgl. z.B. $\Delta t_{2\,wOffset}$, bzw. $\Delta t_{2\,rOffset}$ in Figur 3) oder negativen Offset (vgl. z.B. $\Delta t_{3\,wOffset}$, bzw. $\Delta t_{3\,rOffset}$ in Figur 3) einstellen.

Sofern ein Offset bei einem Kanal vorgesehen wird, führt dieser immer zu einer Asynchronität dieses Kanals gegenüber der Gruppenlatenz bzw. gegenüber der Synchronität der verbleibenden nicht mit einem Offset behafteten Kanäle, sofern nicht der Wert der Gruppenlatenz korrigiert wird. Dies zeigt z.B. Figur 3 links und rechts jeweils bei dem mittleren und unteren Kanal.

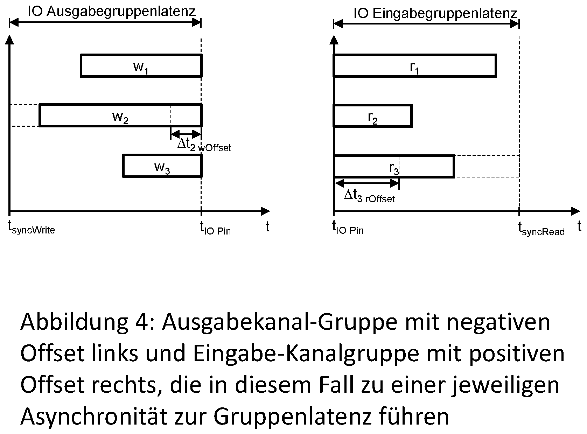

Die Erfindung kann vorsehen in einer jeweiligen Gruppe den erfindungsgemäß gemäß eingangs genannter Definition gebildeten Wert der Gruppenlatenz in Abhängigkeit wenigstens eines Kanaloffsets aller Kanaloffsets zu ändern, insbesondere um trotz Berücksichtigung individueller Kanaloffsets eine Synchronität aller Kanäle einer Gruppe zu erreichen, insbesondere wie es Figur 4 links anhand des mittleren Kanals und rechts anhand des unteren Kanals zeigt.

Insbesondere kann, bevorzugt für Ausgabekanäle, gelten:

$$\text{Neue Gruppenlatenz} = \text{ursprüngliche Gruppenlatenz} + \text{Maximum über alle Kanäle von jeweiligem (Kanaloffset} - \text{Latenzoffset)}.$$

Bevorzugt für Ausgabekanäle kann gelten, dass der gemäß Schritt c) von Anspruch 1 gebildete Wert der Gruppenlatenz korrigiert wird vor Durchführung von Schritt d) gemäß: neue Gruppenlatenz für Schritt d) = Gruppenlatenz von Schritt c) minus Kanaloffset des Kanals der Gruppe mit der größten Kanallatenz. Bei einem negativen Kanaloffset vergrößert sich somit die Gruppenlatenz, wie Abbildung 4 links zeigt im Vergleich zu Abbildung 3 ohne Berücksichtigung der Offsets.

Figur 5 visualisiert das zeitliche Verhalten am Beispiel jeweils eines Kanals und dessen Pins.

Erfindungsgemäß kann jeder Kanal sein eigenes Triggersignal erhalten, welches ausgehend von einem initialen Triggersignal in Abhängigkeit seines Latenzoffsets zeitlich verschoben werden kann. Die Erfindung kann auch vorsehen einen Gruppentrigger der gesamten Gruppe zu erzeugen, hier als Group-Enable bezeichnet. Für den linken Fall der Figur 5 wird deutlich, dass nach Ablauf der Gruppenlatenz, ausgehend vom Gruppentrigger am Pin des jeweiligen Kanal das Ausgangssignal anliegt, was durch das zusätzliche Aktivitätssignal "Pin active" angezeigt werden kann.

Im Fall der rechtsseitigen Eingabe wird deutlich, dass ein am Eingang anliegendes Signal nach Ablauf der Gruppenlatenz ausgehend von Gruppentrigger am Ausgang des Kanals den vorherigen Wert ersetzt und durch einen von der Gruppenlatenz abhängigen Trigger $t_{syncread}$ aus einen Register ausgelesen werden kann. Dies kann für alle Kanäle sodann gleichzeitig erfolgen, da erfindungsgemäß nach Ablauf der Gruppenlatenz alle Kanäle die Signalübernahme ins Zwischenregister abgeschlossen haben.

Das weitere Aktivitätssignal "Data new" zeigt an, dass die neuen Daten in das genannte Register übernommen wurden. Die bevorzugt steigende Flanke dieses Aktivitätssignal signalisiert den frühesten Triggerzeitpunkt $t_{syncread}$, ab dem das Register mit den neuen Daten ausgelesen werden kann.

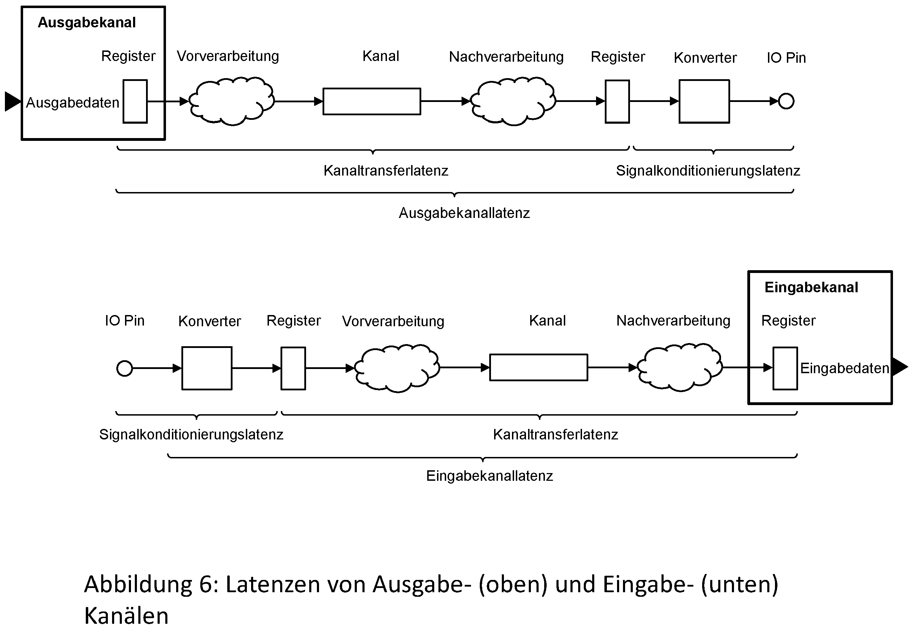

Figur 6 verdeutlicht dass sich eine erfindungsgemäß für einen jeden Kanal zu berücksichtigende Latenz aus verschiedenen Latenzanteilen zusammensetzen kann. Diese Anteile ergeben sich bei der Ausgabe über eine Kanal (Figur 6 oben) zwischen einer Eingangsseite und einem Ausgangspin des Kanals. Die Gesamtlatenz setzt sich hier aus einer Übertragungslatenz und einer Signalkonditionierungslatenz zusammen. In der Figur 6 unten gilt dasselbe in umgekehrter Richtung für einen Eingangskanal.

Die Figur zeigt dabei, dass innerhalb eines Kanals zur Trennung von ggfs. unterschiedlichen Zeit-Domains zwischen eine Ein-Ausgabeschaltung und einer vor- oder nachgelagerten Schaltung, wie z.B. einer FPGA-Schaltung, sich eine Registerstufe im Kanal befinden kann. Der Block "Vorverarbeitung" verdeutlicht, dass oft noch eine Weiterverarbeitung für die Übertragung zum IO-Kanal notwendig ist, z.B. eine Bitbreitenanpassung, Komprimierung oder Serialisierung, wenn der IO-Kanal über einen seriellen Bus angeschlossen ist oder ein digitaler Filter.

Hinter dem Übertragungskanal folgt ggfs. eine Nachverarbeitung (z.B. Dekomprimierung oder Deserialisierung) und erneut eine Registerstufe zur Synchronisierung bei ggfs. unterschiedlichen Zeit-Domains. Diese Latenz vom Ausgabe-Kanalblock bis zu diesem Punkt wird im Folgenden als Kanaltransferlatenz bezeichnet. Zur Gesamten Ausgabe-Latenz eines Kanals addiert sich zusätzlich die Kanalsignalkonditionierungslatenz, z.B. eine Konverter-Latenz, bis die Daten am IO-Pin anliegen. Für einen Eingabekanal gilt die inverse Strecke.

Bei der Erfindung kann optional auch eine automatische Jitter-Kompensation der Kanäle einer IO-Gruppe erfolgen. Jitter entsteht nicht durch die Signalkonditionierung, sondern durch die Übertragung der Daten zur Eingangs-/Ausgangs-Schaltung (IO-Board) z.B. wenn mehrere IO-Kanäle der Schaltung über einen seriellen Kommunikationskanal versorgt werden und die Ausgabeverzögerung von der Last auf dem Kommunikationskanal abhängig ist. Dieser Jitter kann durch eine Zwischenregisterstufe auf der Schaltung (IO-Board) kompensiert werden. Die Weiterschaltung der Registerwerte erfolgt dann z.B. erst nach Abwarten der maximalen Jitterzeit. Das setzt voraus, dass man diese Jitterzeit bestimmen kann bzw. kennt.

Latenzunterschiede der einzelnen Kanäle auf dem IO-Board können dann immer noch direkt auf dem Board kompensiert werden. Dazu kann auf dem IO-Board eine programmierbare Verzögerungsschaltung (bspw. ein FPGA) eingesetzt werden. Der Schaltung werden dann von einer vor- oder nachgelagerten Schaltung (z.B. FPGA-Schaltung oder Prozessorschaltung) z.B. bei der Initialisierung mitgeteilt, welche Kanäle synchron bzw. mit welchem Latenzoffset arbeiten sollen. Alternativ programmiert die vor- oder nachgelagerte Schaltung direkt die nötigen Verzögerungen in die Schaltung mit den Kanälen.

Figur 7 veranschaulicht einen Anwendungsfall, bei dem in einer Gruppe sowohl Eingangskanäle als auch Ausgangskanäle einer Schaltung zusammengefasst sind.

Die Erfindung bewirkt, dass, dass der Zeitpunkt der Ausgabe der Signale an den Kanalausgängen mit dem Samplen der Eingangssignale am jeweiligen Pin zeitgleich oder mit einem einstallbaren Versatz/Offset geschieht.

Ggf. muss ein Gruppentrigger für die Eingangskanäle bevorzugt automatisch verzögert werden, bis die Ausgangssignale am Pin anliegen. Im Fall von gemischten IO-Gruppen kann an einem Latenzport der Eingangskanalobjekte die gemischte Latenz (vgl. Figur 7) angezeigt und ausgegeben werden. Die Ausgangslatenz ist bei gemischten Gruppen identisch mit der Gruppenlatenz einer reinen Ausgabe-Gruppe.

Die Eingangslatenz ist bei gemischten Gruppen die Summe der Gruppenlatenzen reiner Ausgabe- und Eingabe-Gruppen.

**Patentansprüche**

1.  Verfahren zur zeitlich synchronisierten Ausgabe von Signalen und/oder zeitlich synchronisierten Verarbeitung von erfassten Signalen an mehreren Ein- und/oder Ausgabekanälen einer elektronischen Schaltung umfassend folgende Schritte:

    a. Zusammenfassung einer Anzahl von Kanälen aus den Ein- und/oder Ausgabekanälen der elektronischen Schaltung zu einer logischen Gruppe,
    b. Abfrage der Kanallatenz eines jeden zur gebildeten Gruppe gehörigen Kanals aus einer Datenquelle, wobei der Inhalt der Datenquelle, also die darin für jeden Kanal gespeicherten Latenzen, durch den Hersteller der Schaltung bereitgestellt wird,
    c. Ermittlung der größten Kanallatenz aus allen abgefragten Kanallatenzen und zumindest zeitweise Speicherung der größten Kanallatenz als Gruppenlatenz,
    d. Für jeden zur Gruppe gehörenden Kanal: Durchführung einer Bestimmung des zeitlichen Differenzbetrages zwischen der Gruppenlatenz und der abgefragten Kanallatenz des jeweiligen Kanals und Speicherung des ermittelten Differenzbetrages als kanalzugehörigen Latenzoffset in einem Speicher, insbesondere einem Speicher der Schaltung
    e. Beeinflussung des Signallaufes über einen jeweiligen Kanal in Abhängigkeit zumindest von dessen jeweiligem gespeicherten Latenzoffset,

    wobei zumindest die Schritte a) bis d) mittels einer Benutzeroberfläche erfolgen, die durch Software auf einer Datenverarbeitungsanlage implementiert ist, die durch wenigstens eine Kommunikationsverbindung mit der Schaltung verbunden ist, und wobei der Schritt e) der Beeinflussung des Signallaufs über den jeweiligen Kanal einer gebildeten Gruppe durch eine Software oder eine in Hardware realisierte Logik der Schaltung durchgeführt wird, an welche die Latenzoffsets aller Kanäle der Gruppe durch vorherige Kommunikation übermittelt wurden, wobei die Software oder die in Hardware realisierte Logik bei Ausgaben die Ansteuerung der Kanäle in Abhängigkeit der jeweiligen Kanallatenzen verzögert, wobei sich die Verzögerung an dem Latenzoffset orientiert.

2.  Verfahren nach Anspruch 1, **dadurch gekennzeichnet, dass** die Zuordnung eines Kanals zu einer Gruppe erfolgt durch Speicherung einer Gruppenidentifikation, insbesondere einer Gruppennummer, in einem dem jeweiligen Kanal zugeordneten Kanalobjekt einer Benutzeroberfläche, bevorzugt einer grafischen Benutzeroberfläche.

3.  Verfahren nach Anspruch 1, **dadurch gekennzeichnet, dass** die Zuordnung eines Kanals zu einer Gruppe erfolgt durch Erzeugen eines Gruppenobjektes und Speicherung eines Kanalobjektes des jeweiligen Kanals im Gruppenobjekt einer Benutzeroberfläche, bevorzugt einer grafischen Benutzeroberfläche.

4.  Verfahren nach einem der vorherigen Ansprüche, **dadurch gekennzeichnet, dass** zumindest die Werte für die jeweilige Kanallatenz und die Gruppenlatenz in dem Kanalobjekt visualisiert werden.

5.  Verfahren nach einem der vorherigen Ansprüche, **dadurch gekennzeichnet, dass** in Abhängigkeit einer Gruppenlatenz ein Aktivitätssignal generiert wird, welches den Zeitpunkt angibt, wann die Kanäle der Gruppe an ihren jeweiligen Kanalanschlüssen oder einem jeweiligen zugeordneten Speicher ein aktives Signal aufweisen, insbesondere wobei das Signal dem Kanalobjekt und/oder Gruppenobjekt zugeordnet ist.

6.  Verfahren nach einem der vorherigen Ansprüche, **dadurch gekennzeichnet, dass** zu wenigstens einem der Kanäle der Gruppe ein Kanaloffset im Kanalobjekt gespeichert wird, mit welchem eine beabsichtigte Abweichung des Signallaufes über den Kanal von der Gruppenlatenz definiert wird.

**7.** Verfahren nach Anspruch 6, **dadurch gekennzeichnet, dass** in Abhängigkeit wenigstens eines Kanaloffsets der Wert der Gruppenlatenz einer Gruppe geändert wird, insbesondere vor der Ausführung des Schrittes d) des Anspruchs 1.

**8.** Verfahren nach einem der vorherigen Ansprüche, **dadurch gekennzeichnet, dass** die Datenquelle zur Abfrage der Kanallatenzen gebildet wird durch

a. einen Satz von kanalzugeordneten Daten, die auf der Datenverarbeitungsanlage, insbesondere als Datei, gespeichert sind, auf welcher die bevorzugt grafische Benutzeroberfläche ausgeführt wird und die in die Software zur Generierung der Benutzeroberfläche eingelesen werden oder

b. Durch einen Satz von kanalzugeordneten Daten, die in einem Speicherelement, insbesondere einem für alle Kanäle gemeinsamen Speicherelement auf der Schaltung gespeichert sind, aus welchem die Daten ausgelesen und durch Kommunikation übertragen werden an die Software zur Generierung der Benutzeroberfläche

c. Durch einen Satz von Daten, die direkt von einem Benutzer der Software zur Generierung der Benutzeroberfläche in diese Software eingegeben werden

d. Durch einen Satz von Daten der über ein Kommunikationsnetzwerk von einem Server, insbesondere einem Server des Schaltungsherstellers, auf die Datenverarbeitungsanlage geladen wird, auf welcher die bevorzugt grafische Benutzeroberfläche ausgeführt wird und die in die Software zur Generierung der Benutzeroberfläche eingelesen werden.

**9.** Verfahren nach einem der vorherigen Ansprüche, **dadurch gekennzeichnet, dass**

a. an einem initialen Triggerzeitpunkt eine initiale Triggerung der Funktion desjenigen Kanals der Gruppe mit der größten abgefragten Kanallatenz erfolgt zur Auslösung einer Signalverarbeitung mit diesem Kanal und eine sukzessive Triggerung erfolgt von der Funktion der verbleibenden Kanäle der Gruppe zur Auslösung einer Signalverarbeitung mit dem jeweiligen Kanal in der Reihenfolge abnehmender abgefragter Kanallatenzen im zeitlichen Abstand von deren jeweiligem gespeicherten Latenzoffset, insbesondere zuzüglich eines positiven oder negativen Kanaloffsets, zum initialen Triggerzeitpunkt oder

b. die Funktionen aller Kanäle der Gruppe zur Verarbeitung jeweiliger Signale zeitgleich getriggert werden und die durch die Kanalfunktion verarbeiteten Signale jeweils in einem Register zwischengespeichert werden und aus dem Register heraus das verarbeitete Signal jedes Kanals verzögert mit dem jeweiligen gespeicherten Latenzoffset, insbesondere zuzüglich eines positiven oder negativen Kanaloffsets, einer Weiterverarbeitung zugeführt wird.

c. bei Gruppen mit Eingangs- und Ausgangskanälen die jeweiligen Trigger zur Auslösung einer Signalausgabe und einer Signaleingabe zeitgleich erfolgen oder um einen vorbestimmbaren positiven oder negativen Zeitwert, insbesondere um die maximale Latenz unter den Ausgangskanälen versetzt erfolgen.

**10.** Verfahren nach einem der vorherigen Ansprüche, **dadurch gekennzeichnet, dass** zur Bildung eines Wertes für eine Kanallatenz die Zeiten für die Signalkonditionierung in dem Kanal und die Zeit für den Transfer des Signals über den Kanal addiert werden.

**Claims**

**1.** A method for the time-synchronized output of signals and/or time-synchronized processing of detected signals on a plurality of input and/or output channels of an electronic circuit, comprising the following steps:

a. combining a number of channels from the input and/or output channels of the electronic circuit into a logical group,

b. querying the channel latency of each channel belonging to the group formed from a data source, the content of the data source, that is, the latencies stored therein for each channel, being provided by the manufacturer of the circuit,

c. determining the greatest channel latency from all queried channel latencies and, at least temporarily, storing the greatest channel latency as a group latency,

d. for each channel belonging to the group:

performing a determination of the amount of temporal difference between the group latency and the queried channel latency of the respective channel and storing the determined amount of difference as a channel-associated latency offset in a memory, particularly a memory of the circuit

e. influencing the signal propagation over a respective channel as a function of at least the respective stored latency offset thereof,

at least steps a) to d) taking place by means of a user interface implemented by software on a data processing system connected to the circuit by at least one communication link, and step e) the influencing the signal propagation over the respective channel of a formed group performed by software or a logic implemented in hardware of the circuit, to which the latency offsets of all channels of the group were transmitted through previous communication, the software or the logic implemented in hardware delaying the activation of the channels as a function of the respective channel latencies when outputting, the delay being based on the latency offset.

2.  The method according to claim 1, **characterized in that** a channel is associated with a group by storing a group identification, particularly a group number, in a channel object of a user interface associated with the respective channel, preferably a graphical user interface.

3.  The method according to claim 1, **characterized in that** a channel is associated with a group by generating a group object and storing a channel object of the respective channel in the group object of a user interface, preferably a graphical user interface.

4.  The method according to any one of the preceding claims, **characterized in that** at least the values for the respective channel latency and the group latency are visualized in the channel object.

5.  The method according to any one of the preceding claims, **characterized in that,** as a function of a group latency, an activity signal is generated, indicating the point in time when the channels of the group have an active signal at the respective channel connections thereof or a respective associated memory, particularly wherein the signal is associated with the channel object and/or group object.

6.  The method according to any one of the preceding claims, **characterized in that** a channel offset is stored in the channel object for at least one of the channels of the group, with which channel offset an intended deviation of the signal propagation over the channel from the group latency is defined.

7.  The method according to claim 6, **characterized in that** the value of the group latency of a group is changed as a function of at least one channel offset, particularly before the execution of step d) of claim 1.

8.  The method according to any one of the preceding claims, **characterized in that** the data source for querying the channel latencies is formed by

    a. a set of channel-associated data stored on the data processing system, particularly as a file, on which the preferably graphical user interface is executed and which are read into the software for generating the user interface or

    b. by a set of channel-associated data stored in a memory element, particularly a memory element common to all channels on the circuit, from which memory element the data are read out and transmitted through communication to the software for generating the user interface

    c. by a set of data input directly into said software by a user of the software for generating the user interface

    d. by a set of data loaded onto the data processing system from a server over a communication network, particularly a server of the circuit manufacturer, on which data processing system the preferably graphical user interface is executed and which is read into the software for generating the user interface.

9.  The method according to any one of the preceding claims, **characterized in that**

    a. at an initial trigger point in time, an initial triggering of the function of that channel of the group having the greatest queried channel latency takes place to actuate a signal processing with said channel and a successive triggering takes place from the function of the remaining channels of the group to actuate a signal processing with the respective channel in the order of decreasing queried channel latencies at a time interval from the respective stored latency offset thereof, particularly plus a positive or negative channel offset, at the initial trigger point in time or

    b. the functions of all channels of the group for processing the respective signals are triggered simultaneously and the signals processed by the channel function are each temporarily stored in a register and from the register, the processed signal of each channel delayed with the respective stored latency offset, particularly plus a positive or negative channel offset, is fed to a further processing,

c. in groups having input and output channels, the respective triggers for actuating a signal output and a signal input take place simultaneously or are offset by a predeterminable positive or negative time value, particularly by the maximum latency among the output channels.

10. The method according to any one of the preceding claims, **characterized in that** the times for the signal conditioning in the channel and the time for the transfer of the signal over the channel are added to form a value for a channel latency.

**Revendications**

1. Procédé pour la sortie synchronisée dans le temps de signaux et/ou le traitement synchronisé dans le temps de signaux détectés sur plusieurs canaux d'entrée et/ou de sortie d'un circuit électronique, comprenant les étapes suivantes :

   a. regrouper un nombre de canaux parmi les canaux d'entrée et/ou de sortie du circuit électronique en un groupe logique,
   b. interroger la latence de canal de chaque canal appartenant au groupe formé à partir d'une source de données, le contenu de la source de données, c'est-à-dire les latences qui y sont mémorisées pour chaque canal, étant fourni par le fabricant du circuit,
   c. déterminer la plus grande latence de canal à partir de toutes les latences de canal interrogées et mémoriser au moins temporairement la plus grande latence de canal en tant que latence de groupe,
   d. pour chaque canal appartenant au groupe :
   effectuer une détermination du montant différentiel temporel entre la latence de groupe et la latence de canal interrogée du canal respectif et mémoriser le montant différentiel déterminé en tant que décalage de latence propre au canal dans une mémoire, en particulier une mémoire du circuit,
   e. influencer le trajet du signal sur un canal respectif en fonction au moins de son décalage de latence mémorisé respectif,

   dans lequel au moins les étapes a) à d) sont réalisées au moyen d'une interface utilisateur qui est mise en œuvre par un logiciel sur un système de traitement de données qui est connecté au circuit par au moins une liaison de communication, et dans lequel l'étape e) consistant à influencer le trajet du signal transmis sur le canal respectif d'un groupe formé est réalisée par un logiciel ou une logique du circuit mise en œuvre dans le matériel, à laquelle ont été transmis les décalages de latence de tous les canaux du groupe par communication préalable, le logiciel ou la logique mise en œuvre dans le matériel retardant, lors des sorties, l'actionnement des canaux en fonction des latences de canaux respectives, le retard s'orientant sur le décalage de latence.

2. Procédé selon la revendication 1, **caractérisé en ce que** l'affectation d'un canal à un groupe est effectuée par mémorisation d'une identification de groupe, en particulier un numéro de groupe, dans un objet de canal d'une interface utilisateur, de préférence une interface utilisateur graphique, affecté au canal respectif.

3. Procédé selon la revendication 1, **caractérisé en ce que** l'affectation d'un canal à un groupe est effectuée par création d'un objet de groupe et mémorisation d'un objet de canal du canal respectif dans l'objet de groupe d'une interface utilisateur, de préférence une interface utilisateur graphique.

4. Procédé selon l'une quelconque des revendications précédentes, **caractérisé en ce que** au moins les valeurs pour la latence de canal respective et la latence de groupe sont visualisées dans l'objet de canal.

5. Procédé selon l'une quelconque des revendications précédentes, **caractérisé en ce que** en fonction d'une latence de groupe, un signal d'activité est généré qui indique l'instant auquel les canaux du groupe présentent un signal actif au niveau de leurs ports de canal respectifs ou d'une mémoire associée respective, le signal étant en particulier associé à l'objet de canal et/ou à l'objet de groupe.

6. Procédé selon l'une quelconque des revendications précédentes, **caractérisé en ce que** pour au moins l'un des canaux du groupe, un décalage de canal est mémorisé dans l'objet de canal, avec lequel un écart prévu du trajet de signal passant par le canal par rapport à la latence de groupe est défini.

**7.** Procédé selon la revendication 6, **caractérisé en ce que,** en fonction d'au moins un décalage de canal, la valeur de la latence de groupe d'un groupe est modifiée, en particulier avant l'exécution de l'étape d) de la revendication 1.

**8.** Procédé selon l'une quelconque des revendications précédentes, **caractérisé en ce que** la source de données pour l'interrogation des latences des canaux est formée par

a. un ensemble de données associées à un canal, qui sont mémorisées sur le système de traitement de données, en particulier sous la forme d'un fichier, sur lequel l'interface utilisateur, de préférence graphique, est exécutée, et qui sont lues dans le logiciel pour générer l'interface utilisateur, ou

b. un ensemble de données associées à un canal, qui sont mémorisées dans un élément de mémoire, en particulier un élément de mémoire commun à tous les canaux sur le circuit, à partir duquel les données sont lues et transmises par communication au logiciel pour générer l'interface utilisateur,

c. un ensemble de données qui sont saisies directement dans le logiciel par un utilisateur du logiciel pour générer l'interface utilisateur,

d. un ensemble de données qui est chargé via un réseau de communication à partir d'un serveur, en particulier un serveur du fabricant du circuit, sur le système de traitement de données sur lequel est exécutée l'interface utilisateur, de préférence graphique, et qui sont lues dans le logiciel pour générer l'interface utilisateur.

**9.** Procédé selon l'une quelconque des revendications précédentes, **caractérisé en ce que**

a. à un moment de déclenchement initial, un déclenchement initial de la fonction du canal du groupe ayant la plus grande latence de canal interrogé a lieu afin de déclencher un traitement de signal avec ce canal, et un déclenchement successif de la fonction des canaux restants du groupe a lieu afin de déclencher un traitement de signal avec le canal respectif dans l'ordre des latences de canal interrogées décroissantes, à un délai dans le temps à partir de leur décalage de latence mémorisé respectif, en particulier plus un décalage de canal positif ou négatif, au moment de déclenchement initial, ou

b. les fonctions de tous les canaux du groupe pour le traitement des signaux respectifs sont déclenchées simultanément, et les signaux traités par la fonction de canal sont chacun temporairement mémorisés dans un registre, et à partir du registre, le signal traité de chaque canal est fourni à un traitement ultérieur après un retard avec le décalage de latence respectif mémorisé, en particulier plus un décalage de canal positif ou négatif.

c. dans le cas de groupes avec des canaux d'entrée et de sortie, les déclenchements respectifs pour le déclenchement d'une sortie de signal et d'une entrée de signal s'effectuent simultanément ou sont décalés d'une valeur de temps positive ou négative prédéterminable, en particulier de la latence maximale parmi les canaux de sortie.

**10.** Procédé selon l'une quelconque des revendications précédentes, **caractérisé en ce que** pour former une valeur pour une latence de canal, les temps pour le conditionnement du signal dans le canal et le temps pour le transfert du signal sur le canal sont additionnés.

**Ausgabekanal #**

| IO Gruppe ID: #(einstellbar) |
| --- |
| IO Gruppenoffset: ns(einstellbar) |

| IO Gruppenlatenz: | ns |
| --- | --- |
| IO Gruppenjitter: | ns |
| Kanallatenz: | ns |
| Kanaljitter: | ns |

IO Gruppenlatenz ▶
IO Gruppenjitter ▶
Kanallatenz ▶
Kanaljitter ▶

▶ Einzeltrigger
▶ IO Gruppentrigger
▶ Ausgabedaten

Aktivitätssignal „Pin active" ▶

**Eingabekanal #**

| IO Gruppe ID: #(einstellbar) |
| --- |
| IO Gruppenoffset: ns(einstellbar) |

| IO Gruppenlatenz: | ns |
| --- | --- |
| IO Gruppenjitter: | ns |
| Kanallatenz : | ns |
| Kanaljitter : | ns |

IO Gruppenlatenz ▶
IO Gruppenjitter ▶
Kanallatenz ▶
Kanaljitter ▶

▶ Einzeltrigger
▶ IO Gruppentrigger

Eingabedaten ▶
Aktivitätssignal "Data new" ▶
Aktivitätssignal „Pin active" ▶

Abbildung 1: Beispiel für einen Ausgabekanal-Block (links) und einen Eingabekanal-Block (rechts) mit einstellbarer IO Gruppen-Nummer, Anzeige von Latenzen und Signal Ports

Abbildung 2: Beispiel für die Zuordnung von IO Gruppen durch Verwendung von IO Kanälen in Gruppenobjekten

EP 3 244 325 B1

Abbildung 3: Ausgangsgruppenlatenz (links) und Eingangsgruppenlatenz (rechts) von IO Gruppen

Abbildung 7: Gemischte Eingabe- / Ausgabegruppenlatenz von IO Gruppen

EP 3 244 325 B1

Abbildung 4: Ausgabekanal-Gruppe mit negativen Offset links und Eingabe-Kanalgruppe mit positiven Offset rechts, die in diesem Fall zu einer jeweiligen Asynchronität zur Gruppenlatenz führen

EP 3 244 325 B1

IO Ausgabegruppenlatenz

IO Eingabegruppenlatenz

Daten am Pin

Gruppentrigger

Pin active

Ausgabedaten | Daten | Neue Daten

$t_{syncWrite}$     $t_{IO\ Pin}$     t

Daten am Pin

Gruppentrigger

Pin active

Eingabedaten | Alte Daten | Daten

Data new

$t_{IO\ Pin}$     $t_{syncRead}$     t

Abbildung 5: Timing Diagramm für einen Kanal einer IO Ausgangskanal-Gruppe (links) und IO Eingangskanal Gruppe (rechts)

**Ausgabekanal**

Register  Vorverarbeitung  Kanal  Nachverarbeitung  Register  Konverter  IO Pin

Ausgabedaten

Kanaltransferlatenz  Signalkonditionierungslatenz

Ausgabekanallatenz

IO Pin  Konverter  Register  Vorverarbeitung  Kanal  Nachverarbeitung

**Eingabekanal**

Register

Eingabedaten

Signalkonditionierungslatenz  Kanaltransferlatenz

Eingabekanallatenz

Abbildung 6: Latenzen von Ausgabe- (oben) und Eingabe- (unten)
Kanälen

**IN DER BESCHREIBUNG AUFGEFÜHRTE DOKUMENTE**

**In der Beschreibung aufgeführte Patentdokumente**

- EP 6370200 B1